# EUROPÄISCHE PATENTANMELDUNG

(11) **EP 3 311 986 A1**
(43) Veröffentlichungstag der Anmeldung: **25.04.2018**
(21) Anmeldenummer: 17001538.2
(22) Anmeldetag: 13.09.2017
(51) Int. Cl.: B29C 65/04, A61J 1/10

(54) **WERKZEUG ZUM HF-VERSCHWEISSEN, ANLAGE ZUM VERSCHWEISSEN VON FOLIEN, ANLAGE ZUM HERSTELLEN EINES BEUTELS FÜR MEDIZINISCHE ZWECKE, VERFAHREN ZUM BETREIBEN EINER ANLAGE UND BEUTEL**

(30) Priorität: 18.10.2016 DE 102016012428; 24.08.2017 DE 102017007964
(71) Anmelder: KIEFEL GmbH, 83395 Freilassing (DE)
(72) Erfinder: Berger, Rudolf, 83395 Freilassing (DE)
(74) Vertreter: Farago-Schauer, Peter Andreas

(57) **Zusammenfassung**

Die Erfindung betrifft diverse Aspekte bei HF-Schweißverfahren und HF-Schweißvorrichtungen sowie einen mit einem HF-Schweißverfahren hergestellten Beutel.

Bei Werkzeugen zum HF-Verschweißen wird vorgeschlagen, dass das Werkzeug (20) um eine elektrisch leitfähige Lage (24) ergänzt wird, wodurch vorteilhaft unter anderem erreicht werden kann, dass die Qualität einer Schweißverbindung von insbesondere auch besonders dünnen Folien deutlich verbessert werden kann.

## Beschreibung

Die Erfindung betrifft ein Werkzeug zum HF-Verschweißen, eine Anlage zum Verschweißen von Folien, eine Anlage zum Herstellen eines Beutels für medizinische Zwecke, ein Verfahren zum Betreiben einer Anlage und einen Beutel.

Hochfrequenzschweißen (HF-Schweißen) ist eine Schweißtechnik, bei welcher hochfrequente elektrische Energie in den Bereich der Fügepartner eingeleitet wird, wodurch der Bereich erwärmt und die Fügepartner verschweißt werden.

HF-Schweißverfahren werden häufig eingesetzt, um Folien miteinander zu einem luft- oder wasserdichten Beutel oder Schlauch zu verschweißen.

Wesentlicher Bestandteil des HF-Schweißens ist das Hochfrequenz-Erwärmen der Fügepartner oder allgemein eines Gutes.

Beim Hochfrequenz-Erwärmen eines im Wesentlichen planaren und elektrisch weitgehend isolierenden Gutes wird dieses Gut als Dielektrikum zwischen zwei Werkzeugbacken - nachfolgend als Ober- und als Unterwerkzeug bezeichnet - eingebracht. Durch Anlegen einer hochfrequenten Wechselspannung zwischen Ober- und Unterwerkzeug wird das Gut mit einem elektrischen Wechselfeld beaufschlagt und mit Hilfe dielektrischer Verluste erwärmt (dielektrische Erwärmung).

Durch die Erwärmung erweichen die zu verschweißenden Fügepartner und verbinden sich im aufgeschmolzenen Zustand. Endet die Energieeinleitung, so kühlen die Fügepartner ab, erstarren und sind miteinander verschweißt. Die resultierende Verschweißung ist sehr stabil. Insbesondere kann sie wasserdicht sein.

Elektrisch stellt die Anordnung aus Werkzeugbacken und Gut einen verlustbehafteten Kondensator, mit dem Gut als Dielektrikum, dar. Eine Eingangsimpedanz, welche in die Anordnung hinein gemessen werden kann, weist einen Real- und einen Imaginärteil auf. Das Verhältnis von Imaginär- zu Realteil, die sogenannte Güte des Kondensators, ist bestimmend für die dielektrische Erwärmbarkeit des Gutes: Je höher die Güte, desto geringer der Anteil der dielektrischen Verluste im Gut an der Leistung des Wechselfeldes, und desto geringer die dielektrische Erwärmbarkeit.

Die elektrische Wechselspannung über dem Kondensator wird mit Hilfe einer Spannungsquelle mit einer Quellimpedanz, beispielsweise 50 Ω, zur Verfügung gestellt. Zwischen der Spannungsquelle und dem Kondensator ist ein Anpassnetzwerk angeordnet. Das Anpassnetzwerk transformiert die Quellimpedanz der Spannungsquelle auf eine effektive Quellimpedanz am Kondensator. Die elektrische Leistung der Wechselspannung am Kondensator wird umso effektiver in eine dielektrische Erwärmung des Gutes umgesetzt, je genauer die effektive Quellimpedanz mit dem komplex Konjugierten der Eingangsimpedanz übereinstimmt.

Neben dem Gut weist auch das Anpassnetzwerk Verluste auf. Je kleiner der Realteil der Eingangsimpedanz der Anordnung, desto höher ist der Anteil der Verluste im Anpassnetzwerk an der mit Hilfe der Spannungsquelle zur Verfügung gestellten Leistung der Wechselspannung. Je dünner das im Wesentlichen planare Gut bei gegebener Fläche wird, desto kleiner die Eingangsimpedanz, und desto kleiner insbesondere ihr Realteil: Für dünne zu erwärmende Güter ergibt sich ein unvorteilhaft hoher Anteil an Verlusten im Anpassnetzwerk.

Mithin wirken sich sowohl eine hohe Güte - ein hoher Imaginär- bei einem im Verhältnis niedrigen Realteil der Eingangsimpedanz - als auch ein hoher Imaginärteil selbst negativ auf eine Effizienz aus, mit welcher sich die elektrische Leistung der Spannungsquelle in dielektrische Erwärmung des Gutes umsetzen lässt.

Der Erfindung liegt die Aufgabe zugrunde, dem Stand der Technik eine Verbesserung oder eine Alternative zur Verfügung zu stellen.

Nach einem ersten Aspekt der Erfindung löst die Aufgabe ein Werkzeug zum HF-Verschweißen von zwei Folien, mit einem Oberwerkzeug, einem Unterwerkzeug und einer Schweißunterlage, wobei das Oberwerkzeug und das Unterwerkzeug als Elektroden ausgeführt sind, wobei das Werkzeug eine elektrisch leitfähige Lage aufweist, wobei die elektrisch leitfähige Lage zumindest teilweise durch die Schweißunterlage von dem Unterwerkzeug getrennt ist.

Begrifflich sei hierzu Folgendes erläutert:
Zunächst sei ausdrücklich darauf hingewiesen, dass im Rahmen der hier vorliegenden Patentanmeldung unbestimmte Artikel und Zahlenangaben wie "ein", "zwei" usw. im Regelfall als "mindestens"-Angaben zu verstehen sein sollen, also als "mindestens ein...", "mindestens zwei ..." usw., sofern sich nicht aus dem jeweiligen Kontext ausdrücklich ergibt oder es für den Fachmann offensichtlich oder technisch zwingend ist, dass dort nur "genau ein ...", "genau zwei ..." usw. gemeint sein können.

Unter "Verschweißen" wird insbesondere das unlösbare Verbinden von Bauteilen unter Anwendung von Wärme und/oder Druck mit oder ohne Schweißzusatzwerkstoffen verstanden.

Eine "Folie" bezeichnet insbesondere ein dünnes Kunststoffblatt, sei es als Einzelblatt oder sei es als Endlosband. Insbesondere sei bei "Folie" auch an PVC-Folie, PU-Folie, EVA-EBA-Folie und EMMA-Folie gedacht.

Unter einem "Fügepartner" wird insbesondere eine Folie verstanden. Es ist jedoch auch denkbar, dass andere Werkstoffe als Fügepartner dienen.

Unter einem "Gut" werden insbesondere die beim HF-Schweißen zu verschweißenden Fügepartner verstanden, insbesondere Folien. Es ist jedoch auch konkret unter anderem denkbar, dass die Vorrichtung zum HF-Verschweißen nur zum HF-Erwärmen verwendet wird und dabei das "Gut" erwärmt wird, wobei hier unter einem "Gut" jegliche Werkstoffe verstanden werden sollen, die sich durch mittels eines Hochfrequenzverfahrens erwärmen lassen.

Unter einem "Oberwerkzeug" wird ein erstes Werkzeugteil zum HF-Verschweißen verstanden, welches dem Namen nach insbesondere oben angeordnet ist. Ein Oberwerkzeug kann jedoch auch unten oder seitlich angeordnet sein.

Unter einem "Unterwerkzeug" wird ein zweites Werkzeugteil zum HF-Verschweißen verstanden, welches dem Namen nach insbesondere unten angeordnet ist. Ein Unterwerkzeug kann jedoch auch oben oder seitlich angeordnet sein.

Ober- und Unterwerkzeug wirken im Betrieb zusammen.

Unter einer "Schweißunterlage" wird eine Materiallage verstanden, die sich in einem designierten Schweißvorgang zwischen einer Schweißelektrode und zumindest einem Teil eines Fügepartners befindet. Insbesondere wird unter einer "Schweißunterlage" eine im Wesentlichen planare, aber im Allgemeinen verlustarme, dielektrische Beladung des Kondensators, parallel zum zu erwärmenden und/oder zu verschweißenden Gut verstanden. Eine "Schweißunterlage" kann ein separates Bauteil sein, welches mit einem anderen Bauteil des Werkzeugs verbunden ist. Konkret kann unter einer "Schweißunterlage" jedoch auch eine Beschichtung eines anderen Bauteils mit einem anderen Material verstanden werden, insbesondere eine Beschichtung des Unterwerkzeugs, des Oberwerkzeugs und/oder der elektrisch leitenden Schicht.

Eine "Schweißunterlage" wurde im Stand der Technik bei einem designierten Schweißvorgang zwischen einer Elektrode des Werkzeugs, insbesondere dem Unterwerkzeug, und zumindest einem Teil eines Fügepartners positioniert. Hier wird abweichend vorgeschlagen, dass sich eine elektrisch leitfähige Lage zwischen einer Schweißunterlage und zumindest einem Teil eines Fügepartners erstreckt.

Eine "Elektrode" ist ein Elektronenleiter, der im Zusammenspiel mit einer Gegenelektrode mit einem zwischen beiden Elektroden befindlichen Medium in Wechselwirkung steht. Elektroden bestehen aus elektrischen Leitern, insbesondere aus einem Metall oder aus Graphit.

Unter einer "elektrisch leitfähigen Lage" wird eine Materiallage verstanden, die ein elektrisch leitfähiges Material aufweist. Insbesondere kann eine elektrisch leitfähige Lage ein Metall oder Graphit aufweisen. Die "elektrisch leitfähige Lage" wird auch als "Mittelelektrode" bezeichnet.

Unter "teilweise" wird verstanden, dass die Oberfläche der elektrisch leitfähigen Lage, die in Richtung des Unterwerkzeugs orientiert ist, zumindest zum Teil nicht in Kontakt mit dem Unterwerkzeug steht und dieser Teil die Schweißunterlage zwischen der elektrisch leitfähigen Lage und dem Unterwerkzeug aufweist. Denkbar ist auch, dass die elektrisch leitfähige Lage vollständig nicht im Kontakt mit dem Unterwerkzeug steht und sich die Schweißunterlage zwischen dem Unterwerkzeug und der elektrisch leitfähigen Lage befindet.

Der Stand der Technik sah bislang vor, dass zur Verbesserung der Effizienz des HF-Schweißvorgangs eine Schweißunterlage verwendet wurde. Durch die Schweißunterlage wurde die Kapazität des Kondensators verringert - und damit der Imaginärteil der Eingangsimpedanz erhöht - im Wesentlichen ohne den Realteil zu verändern: Somit konnte die Effizienz des HF-Schweißens mit Hilfe der Schweißunterlage erhöht werden.

Die Kapazität zwischen dem Oberwerkzeug und dem Unterwerkzeug stellt sich dar als Serienschaltung zwischen einem ersten kapazitiven Anteil mit der Schweißunterlage als Dielektrikum und einem zweiten kapazitiven Anteil mit dem zu erwärmenden Gut als Dielektrikum. Je dicker die Schweißunterlage, desto geringer der erste kapazitive Anteil, und desto geringer der Anteil an der Gesamtspannung zwischen dem Oberwerkzeug und dem Unterwerkzeug, welcher zur Erwärmung des Gutes zur Verfügung steht: Mit der vorteilhaften Reduktion der Gesamtkapazität geht eine Reduktion der Feldstärke im Gut einher.

Abweichend wird hier vorgeschlagen, dass zwischen der Schweißunterlage und dem Gut eine, gegen Ober- und Unterwerkzeug elektrisch isolierte, leitfähige Schicht eingebracht wird, beispielsweise eine Metallplatte. Diese leitfähige Schicht wird nachfolgend auch als Mittelelektrode bezeichnet. Ohne Beschränkung der Allgemeinheit wird, zur größeren Klarheit der Darstellung, nachfolgend die Schweißunterlage als zwischen Unterwerkzeug und Mittelelektrode gelegen gedacht.

Vorteilhaft kann dadurch erreicht werden, dass die Feldstärke im Gut erhöht werden kann und dass der elektrische Wirkungsgrad des HF-Werkzeugs gesteigert werden kann, wodurch die Energiekosten gesenkt und die Umwelt entlastet werden können.

Weiterhin kann vorteilhaft erreicht werden, dass der im Stand der Technik bekannte hohe mechanische Verschleiß, dem die Schweißunterlage unterworfen ist und welcher erheblich zu den Herstellungskosten beiträgt, reduziert werden, wodurch die Wartungskosten und die Herstellkosten reduziert werden können und die Verfügbarkeit des Werkzeugs sowie die Stabilität der Produktion erhöht werden können.

Im Stand der Technik rührt der mechanische Verschleiß im Wesentlichen aus zwei Verschleißmechanismen: Der mechanischen Belastung, welche zu einer kontinuierlichen Degradation der Schweißunterlage führt, und auftretenden elektrischen Überschlägen zwischen dem Oberwerkzeug und dem Unterwerkzeug, welche im Allgemeinen mit einer sofortigen Zerstörung der Schweißunterlage einhergehen. Beide Verschleißmechanismen können hier vorteilhaft erheblich reduziert werden, wodurch die Schweißnahtqualität unter anderem auch reproduzierbarer wird.

Vorteilhaft kann ebenfalls erreicht werden, dass unterschiedliche Schichtaufbauten der Fügepartner im Schweißnahtbereich möglich werden.

Außerdem lässt sich der wesentliche Vorteil durch Verwendung der Mittelelektrode erreichen, dass die Breite der Mittelelektrode in der Ebene des im Wesentlichen planaren Gutes abweichend von der Breite des Randbereiches gewählt werden kann: Eine Gesamtkapazität zwischen Ober- und Unterwerkzeug stellt sich elektrisch als Serienschaltung einer ersten Kapazität zwischen Oberwerkzeug und Mittelelektrode, mit dem Gut als Dielektrikum, und einer zweiten Kapazität zwischen Mittelelektrode und Unterwerkzeug, mit der Schweißunterlage als Dielektrikum, dar.

Bei einer, ausgehend von anderen Erwägungen, vorgewählten Dicke der Schweißunterlage lässt sich demnach vorteilhaft der Anteil der Gesamtspannung zwischen dem Oberwerkzeug und dem Unterwerkzeug, welcher zur dielektrischen Erwärmung des Gutes zur Verfügung steht, durch geeignete Wahl der Breite der Mittelelektrode im Verhältnis zur Breite des Randbereichs einstellen.

Dies erlaubt insbesondere, durch Einbringen einer Mittelelektrode nur in Teilen des Randbereichs, in unterschiedlichen Abschnitten des Randbereichs Güter mit unterschiedlichem Lagenaufbau gleichzeitig und gleichmäßig vorteilhaft zu verschweißen.

Es erlaubt ferner in vorteilhafter Weise eine erhöhte Dicke, und damit eine erhöhte mechanische Stabilität, der Schweißunterlage, ohne den Anteil an der Spannung zwischen dem Oberwerkzeug und dem Unterwerkzeug, welcher auf die dielektrische Erwärmung des Gutes entfällt, nachteilhaft stark zu verringern.

Der Aufbau erlaubt eine optimierte Funktion der elektrischen Schaltanlage, wodurch die Leistungsregelung beim Einsinken des Werkzeugs in das Material verbessert werden kann und wodurch Feldverteilungsprobleme reduziert oder gelöst werden können.

So kann auch bei besonders dünnen Fügepartnern und/oder Fügepartnern mit geringem Verlustfaktor vorteilhaft erreicht werden, dass die Überschlagsneigung des Werkzeugs reduziert und die Qualität der Schweißnaht sowie die Reproduzierbarkeit der Schweißnahtqualität verbessert werden kann. So kann beispielsweise auch die Symmetrie der Schweißung verbessert werden, da unter anderem die Planparallelität der Auflageflächen der Fügepartner verbessert werden kann, wodurch die Qualität der Schweißverbindung ansteigt.

Konkret ist unter anderem denkbar, dass die elektrisch leitende Schicht eine weniger stark haftende Oberfläche aufweist, wodurch die Fügepartner nach dem Schweißvorgang besser aus dem Werkzeug gelöst und somit auch kürzere Taktzeiten für eine Schweißung ermöglicht werden.

Das Werkzeug erlaubt insbesondere die Herstellung von Urinbeuteln, Brustprothesen sowie Katheder Verpackungen mit dünneren Fügepartnern, insbesondere Folien, und gleichzeitig stabileren Verschweißungen mit höherer Schweißqualität, sodass die Produkte insgesamt deutlich verbessert werden können.

Ebenfalls wird vorgeschlagen, dass die Leistung des Werkzeugs beim Einsinken des Werkzeugs in die Fügepartner sich selbstständig regelt, sodass die Auftretenswahrscheinlichkeit eines elektrischen Überschlags weitgehend reduziert oder ausgeschlossen werden kann, wodurch die Qualität der Schweißverbindung verbessert werden kann.

Bevorzugt weist die Schweißunterlage einen elektrischen Isolator auf.

Begrifflich sei hierzu Folgendes erläutert:
Ein "elektrischer Isolator" weist eine bedeutungslos geringe elektrische Leitfähigkeit auf. Er weist einen möglichst hohen spezifischen Widerstand und eine hohe Durchschlagsfestigkeit auf.

Konkret ist so unter anderem denkbar, dass die elektrisch leitfähige Schicht eine Keramikbeschichtung und/oder eine Emaille aufweist und diese zusätzliche elektrisch isolierende Schicht der elektrisch leitfähigen Schicht die Schweißunterlage darstellt.

Vorteilhaft kann dadurch erreicht werden, dass der Aufbau des Werkzeugs vereinfacht werden kann.

Ebenfalls kann die Schweißunterlage auf diese Weise verschleißfreier und härter ausgeführt werden. Die Härte der Schweißunterlage kann vorteilhaft die Reproduzierbarkeit und die Qualität der Schweißnaht beeinflussen, da der Aufbau des Werkzeugs weniger elastisch ist, wodurch unter anderem die Parallelität des Werkzeugaufbaus und der Fügepartner auch während dem Schweißvorgang gewährleistet werden kann. Insgesamt können so die Kosten gesenkt und die Qualität der Schweißnaht verbessert werden.

Ein weiterer Vorteil ergibt sich durch die bessere Ablösbarkeit der Fügepartner von der Schweißunterlage.

Optional ist die Schweißunterlage thermisch leitend.

Begrifflich sei hierzu Folgendes erläutert:
Unter "thermisch leitend" wird verstanden, dass die Schweißunterlage eine Wärmeleitfähigkeit aufweist.

Dabei ist konkret unter anderem denkbar, dass die geringere Wärmeleitfähigkeit der elektrisch leitenden Schicht, welche sich positiv auswirken kann, durch eine höhere Wärmeleitfähigkeit der Schweißunterlage kompensiert wird.

Vorteilhaft kann dadurch erreicht werden, dass die Wärmeabfuhr durch die Schweißunterlage im Verhältnis zur Takt-Zahl des Werkzeugs, mit der Schweißvorgänge durchgeführt werden, ermöglicht wird, ein Brand eines Fügepartners in Folge einer zu hohen Werkzeugtemperatur verhindert werden kann.

Bevorzugt weist die Schweißunterlage eine Aramidfaser auf.

Vorteilhaft kann dadurch erreicht werden, dass die Schweißunterlage die positiven Eigenschaften einer Aramidfaser ausnutzen kann, sodass eine sehr zugfeste, zähe hitzebeständige und maßhaltige Schweißunterlage möglich ist.

Optional weist die Schweißunterlage Polyester auf.

Konkret ist unter anderem denkbar, dass ein Polyester als Matrixharz für die Schweißunterlage verwendet wird.

Vorteilhaft kann dadurch erreicht werden, dass die Schweißunterlage die positiven Eigenschaften eines Polyesters ausnutzen kann, insbesondere die schwachleitende elektrische Eigenschaft des Polyesters.

Bevorzugt weist die Schweißunterlage Polyethylen auf.

Vorteilhaft kann dadurch erreicht werden, dass die Schweißunterlage die positiven Eigenschaften eines Polyethylens ausnutzen kann, insbesondere die guten elektrischen Isolationseigenschaften des Polyethylens.

Optional weist die Schweißunterlage ein Hartpapier auf.

Begrifflich sei hierzu Folgendes erläutert:
Ein "Hartpapier" ist ein Faserverbundwerkstoff aus Papier und einem Kunstharz. Hartpapier wird als Isolierstoff und isolierendes Trägermaterial verwendet.

Vorteilhaft kann dadurch erreicht werden, dass die Schweißunterlage die positiven Eigenschaften eines Hartpapiers ausnutzen kann, insbesondere die guten Isolationseigenschaften des Hartpapiers.

Bevorzugt ist die elektrisch leitfähige Lage aus Metall.

Konkret ist so unter anderem denkbar, dass die elektrisch leitfähige Lage zumindest teilweise aus Edelstahl besteht.

Vorteilhaft kann dadurch erreicht werden, dass sich die elektrisch leitfähige Lage die Eigenschaften eines Metalls zu eigen macht, insbesondere die hohe elektrische Leitfähigkeit des Metalls.

Optional ist die elektrisch leitfähige Lage selbstklebend.

Begrifflich sei hierzu Folgendes erläutert:
Unter "selbstklebend" wird verstanden, dass die elektrisch leitfähige Lage eine klebende Schicht aufweist.

So ist denkbar, dass die elektrisch leitfähige Lage mit Hilfe der klebenden Schicht mit der Schweißunterlage und/oder dem Unterwerkzeug verklebt werden kann.

Vorteilhaft kann dadurch erreicht werden, dass die elektrisch leitfähige Lage einfach und beständig mit der Schweißunterlage und/oder dem Unterwerkzeug verbunden werden kann und so nicht verrutschen kann.

Bevorzugt ist die elektrisch leitfähige Lage mit der Schweißunterlage verbunden.

Vorteilhaft kann dadurch erreicht werden, dass die elektrisch leitfähige Lage nicht separat von der Schweißunterlage in dem Werkzeug positioniert werden muss.

Optional ist die elektrisch leitfähige Lage mit der Schweißunterlage verklebt.

Vorteilhaft kann dadurch erreicht werden, dass die elektrisch leitfähige Lage mit der Schweißunterlage verbunden ist, wodurch keine Positionsfehler mehr zwischen der Schweißunterlage und der elektrisch leitfähigen Lage auftreten können.

Bevorzugt weist das Oberwerkzeug eine Trennkante auf.

Begrifflich sei hierzu Folgendes erläutert:
Unter einer "Trennkante" wird ein kantenförmiger Vorsprung und/oder eine kantenförmige Erhebung des Oberwerkzeugs verstanden.

Es ist denkbar, dass das Unterwerkezug eine Trennkante aufweist.

Häufig soll ein im Wesentlichen planares Gut nur in einzelnen Bereichen dielektrisch erwärmt werden, ein Beispiel wofür das HF-Schweißen von Beuteln aus zwei Lagen Plastikfolie darstellt: Nur im Randbereich der späteren Beutel soll das Gut erwärmt, und gleichzeitig unter Aufbringung mechanischen Drucks beide Folienlagen miteinander verschweißt werden. Zu diesem Zweck kann beispielsweise das Unterwerkzeug eben ausgestaltet sein, während das Oberwerkzeug im Randbereich des oder der zu schweißenden Beutel eine erhaben ausgeführte Trennkante aufweist. Elektrische Feldstärke, dielektrische Erwärmung und mechanische Kraft konzentrieren sich vorteilhaft in diesem Randbereich. Die Fläche, welcher die Kapazität des verlustbehafteten Kondensators proportional ist, wird hierbei nicht mehr durch die Gesamtfläche des Oberwerkzeugs, sondern im Wesentlichen ausschließlich durch die kleinere Fläche des Randbereichs des oder der Beutel gegeben, als Produkt aus einer mittleren Länge und einer mittleren Breite eines solchen oder mehrerer solcher Randbereiche.

Vorteilhaft kann dadurch erreicht werden, dass mit einer Trennkante am Oberwerkzeug eine dünne Schweißlinie hergestellt werden kann, die eine hohe Schweißqualität aufweist und welche eine sehr robuste Verschweißung der Fügepartner ermöglicht.

Optional ist die Schweißunterlage zwischen dem Unterwerkzeug und dem Oberwerkzeug angeordnet.

Vorteilhaft kann dadurch erreicht werden, dass durch die Anordnung der Komponenten des Schweißwerkzeugs dieses ein besonders vorteilhaftes Ergebnis ermöglicht.

Bevorzugt ist die Schweißunterlage mit dem Unterwerkzeug verbunden.

Vorteilhaft kann dadurch erreicht werden, dass die Schweißunterlage mit dem Unterwerkzeug verbunden ist und nicht separat im Werkzeug positioniert werden muss. Dadurch kann die Anzahl der durchführbaren Verschweißungen pro Zeiteinheit steigen, während gleichermaßen die Qualität der Schweißung gesteigert werden kann.

Optional weist die elektrisch leitfähige Lage eine elektrische Verbindung zu der elektrischen Schaltanlage auf.

Vorteilhaft kann dadurch erreicht werden, dass die elektrisch leitfähige Lage separat mit elektrischer Energie versorgt werden kann.

Nach einem zweiten Aspekt der Erfindung löst die Aufgabe eine Anlage zum Verschweißen von Folien, mit einer Folienzuführung und einer Schweißstation, wobei die Schweißstation ein Werkzeug nach dem ersten Aspekt der Erfindung aufweist.

Begrifflich sei hierzu Folgendes erläutert:
Unter einer "Folienzuführung" wird eine Vorrichtung verstanden, mit der die Folie der Anlage zum Verschweißen von Folien zugeführt werden kann.

Unter einer "Schweißstation" wird eine in die Anlage zum Verschweißen von Folie integrierte Vorrichtung verstanden, welche mit einem HF-Schweißwerkzeug ausgestattet ist.

Es versteht sich, dass sich die Vorteile eines Werkzeugs zum HF-Verschweißen von zwei Folien nach dem ersten Aspekt der Erfindung, mit einem Oberwerkzeug, einem Unterwerkzeug und einer Schweißunterlage, wobei das Oberwerkzeug und das Unterwerkzeug als Elektroden ausgeführt sind, wobei das Werkzeug eine elektrisch leitfähige Lage aufweist, wobei die elektrisch leitfähige Lage zumindest teilweise durch die Schweißunterlage von dem Unterwerkzeug getrennt ist, wie vorstehend beschrieben unmittelbar auf eine Anlage zum Verschweißen von Folien, mit einer Folienzuführung und einer Schweißstation, wobei die Schweißstation ein Werkzeug nach dem ersten Aspekt der Erfindung aufweist, erstrecken.

Es sei ausdrücklich darauf hingewiesen, dass der Gegenstand des zweiten Aspekts mit dem Gegenstand des vorstehenden Aspekts der Erfindung vorteilhaft kombinierbar ist, und zwar sowohl einzeln oder in beliebiger Kombination kumulativ.

Nach einem dritten Aspekt der Erfindung löst die Aufgabe eine Anlage zum Herstellen eines Beutels für medizinische Zwecke, mit einer Folienzuführung, einer Schweißstation und bevorzugt einer Befüllstation, wobei die Schweißstation ein Werkzeug nach dem ersten Aspekt der Erfindung aufweist.

Begrifflich sei hierzu Folgendes erläutert:
Ein "Beutel" ist ein hohler, dünnwandiger, leicht verformbarer Gegenstand, der zur Aufnahme von anderen Gegenständen, insbesondere Flüssigkeiten, geeignet ist. Ein Beutel kann ein offener oder ein geschlossener Beutel sein.

Unter einer "Befüllstation" wird eine Vorrichtung zum Befüllen eines Beutels mit einem Medium verstanden.

Es versteht sich, dass sich die Vorteile eines Werkzeugs zum HF-Verschweißen von zwei Folien nach dem ersten Aspekt der Erfindung, mit einem Oberwerkzeug, einem Unterwerkzeug und einer Schweißunterlage, wobei das Oberwerkzeug und das Unterwerkzeug als Elektroden ausgeführt sind, wobei das Werkzeug eine elektrisch leitfähige Lage aufweist, wobei die elektrisch leitfähige Lage zumindest teilweise durch die Schweißunterlage von dem Unterwerkzeug getrennt ist, wie vorstehend beschrieben unmittelbar auf eine Anlage zum Herstellen eines Beutels für medizinische Zwecke, mit einer Folienzuführung, einer Schweißstation und bevorzugt einer Befüllstation, wobei die Schweißstation ein Werkzeug nach dem ersten Aspekt der Erfindung aufweist, erstrecken.

Es sei ausdrücklich darauf hingewiesen, dass der Gegenstand des dritten Aspekts mit dem Gegenstand der vorstehenden Aspekte der Erfindung vorteilhaft kombinierbar ist, und zwar sowohl einzeln oder in beliebiger Kombination kumulativ.

Nach einem vierten Aspekt der Erfindung löst die Aufgabe ein Verfahren zum Betreiben einer Anlage nach dem zweiten oder dem dritten Aspekt der Erfindung, mit den Schritten: Führen zweier Folien in die Schweißstation, wobei die Folien zwischen Oberwerkzeug und elektrisch leitfähige Lage geführt werden; und Beaufschlagen der Elektroden mit hochfrequenter Elektrizität zum HF-Verschweißen der Folien.

Vorteilhaft kann dadurch erreicht werden, dass eine Verschweißung einer Folie insbesondere zu einem Beutel innerhalb einer Anlage nach dem zweiten oder dem dritten Aspekt der Erfindung durchgeführt werden kann und sich somit die Vorteile einer Anlage nach dem zweiten oder dem dritten Aspekt der Erfindung wie vorstehend beschrieben unmittelbar auf ein Verfahren zum Betreiben einer solchen Anlag erstrecken.

Es sei ausdrücklich darauf hingewiesen, dass der Gegenstand des vierten Aspekts mit dem Gegenstand der vorstehenden Aspekte der Erfindung vorteilhaft kombinierbar ist, und zwar sowohl einzeln oder in beliebiger Kombination kumulativ.

Nach einem fünften Aspekt der Erfindung löst die Aufgabe ein Verfahren zum Betreiben einer Anlage nach dritten Aspekt der Erfindung, mit den Schritten: Führen zweier Folien in die Schweißstation, wobei die Folien zwischen Oberwerkzeug und elektrisch leitfähige Lage geführt werden; Beaufschlagen der Elektroden mit hochfrequenter Elektrizität zum HF-Verschweißen der Folien zu einem Beutel; und Befüllen des Beutels.

Vorteilhaft kann dadurch erreicht werden, dass eine Verschweißung einer Folie insbesondere zu einem Beutel innerhalb einer Anlage nach dem dritten Aspekt der Erfindung durchgeführt werden kann und sich somit die Vorteile einer Anlage nach dem dritten Aspekt der Erfindung wie vorstehend beschrieben unmittelbar auf ein Verfahren zum Betreiben einer solchen Anlag erstrecken.

Es sei ausdrücklich darauf hingewiesen, dass der Gegenstand des fünften Aspekts mit dem Gegenstand der vorstehenden Aspekte der Erfindung vorteilhaft kombinierbar ist, und zwar sowohl einzeln oder in beliebiger Kombination kumulativ.

Nach einem sechsten Aspekt der Erfindung löst die Aufgabe ein Beutel, insbesondere ein Beutel für medizinische Zwecke, hergestellt aus zwei Folien mittels einer Anlage nach dem zweiten oder dem dritten Aspekt der Erfindung und/oder eines Verfahrens nach dem vierten oder dem fünften Aspekt der Erfindung.

Es versteht sich, dass sich die Vorteile einer Anlage nach dem zweiten oder dem dritten Aspekt der Erfindung wie vorstehend beschrieben und/oder die Vorteile eines Verfahrens nach dem vierten oder dem fünften Aspekt der Erfindung wie vorstehend beschrieben unmittelbar auf einen Beutel, insbesondere ein Beutel für medizinische Zwecke, hergestellt aus zwei Folien mittels einer solchen Anlage und/oder eines solchen Verfahrens erstrecken.

Es sei ausdrücklich darauf hingewiesen, dass der Gegenstand des sechsten Aspekts mit dem Gegenstand der vorstehenden Aspekte der Erfindung vorteilhaft kombinierbar ist, und zwar sowohl einzeln oder in beliebiger Kombination kumulativ.

Nachstehend wird die Erfindung anhand eines Ausführungsbeispiels unter Bezugnahme auf die Zeichnung näher erläutert. Dort zeigen
- Fig. 1: in schematischer Weise ein im Stand der Technik bekanntes Werkzeug zum HF-Verschweißen,
- Fig. 2: in schematischer Weise ein alternatives im Stand der Technik bekanntes Werkzeug zum HF-Verschweißen, und
- Fig. 3: in schematischer Weise eine Variante eines hier vorgeschlagenen Werkzeugs zum HF-Verschweißen.

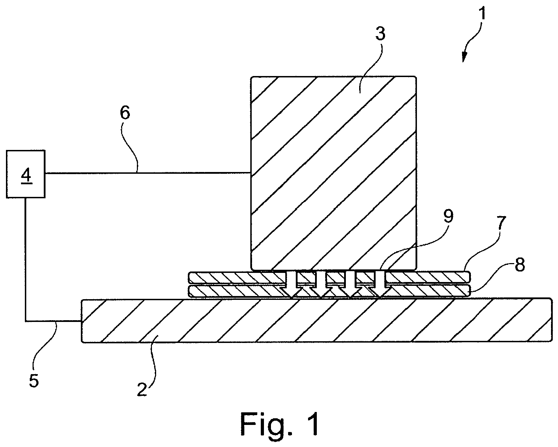

Das zum Stand der Technik zählende Werkzeug zum HF-Verschweißen (Schweißwerkzeug) 1 in Fig. 1 besteht im Wesentlichen aus einem Unterwerkzeug 2, einem Oberwerkzeug 3 und einer elektrischen Schaltanlage 4, wobei das Oberwerkzeug 3 oberhalb des Unterwerkzeugs 2 angebracht ist.

Die elektrische Schaltanlage 4 ist über die Leitungen 6 elektrisch mit dem Oberwerkzeug 3 und die Leitung 5 elektrisch mit dem Unterwerkzeug 2 verbunden.

Zum Verschweißen einer ersten Folie 7 mit einer zweiten Folie 8 werden diese zwischen dem Oberwerkzeug 3 und dem Unterwerkzeug 2 in das Schweißwerkzeug 1 eingeführt und ausgerichtet. Anschließend werden Oberwerkzeug 3 und Unterwerkzeug 2 geschlossen, sodass die Folien 7, 8 nicht mehr im Schweißwerkzeug 1 verrutschen, und es wird elektrische Energie (nicht abgebildet) von der elektrischen Schaltanlage 4 an das Oberwerkzeug 3 und das Unterwerkzeug 2 übertragen.

Durch die elektrische Energie (nicht abgebildet) baut sich ein elektrisches Wechselfeld 9 zwischen dem Oberwerkzeug 3 und dem Unterwerkzeug 2 auf. Das elektrische Wechselfeld 9 führt durch dielektrische Verluste (nicht abgebildet) zu einer Erwärmung (nicht abgebildet) der Folien 7, 8.

Durch die Erwärmung (nicht abgebildet) erweichen die zu verschweißenden Folien 7, 8 und verbinden sich im aufgeschmolzenen Zustand (nicht abgebildet) auch durch den mechanischen Druck (nicht abgebildet) zwischen dem Oberwerkzeug 3 und dem Unterwerkzeug 2.

Anschließend wird die elektrische Energie (nicht abgebildet) von der elektrische Schaltanlage 4 gestoppt. Danach werden das Oberwerkzeug 3 und das Unterwerkzeug 2 geöffnet und die verschweißten Folien 7, 8 können entnommen werden.

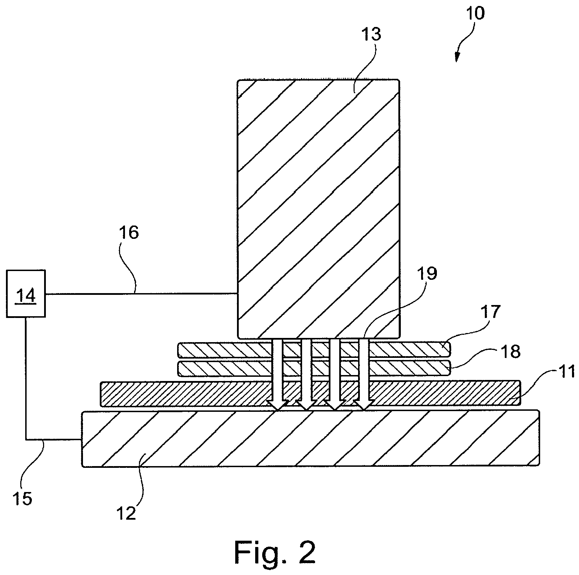

Das zum Stand der Technik zählende Schweißwerkzeug 10 in Fig. 2 besteht im Wesentlichen aus einer Schweißunterlage 11, einem Unterwerkzeug 12, einem Oberwerkzeug 13 und einer elektrischen Schaltanlage 14, wobei das Oberwerkzeug 13 oberhalb des Unterwerkzeugs 12 und die Schweißunterlage 11 zwischen dem Oberwerkzeug 13 und dem Unterwerkzeug 12 angebracht sind.

Die elektrische Schaltanlage 14 ist über die Leitungen 16 elektrisch mit dem Oberwerkzeug 13 und die Leitung 15 elektrisch mit dem Unterwerkzeug 12 verbunden.

Durch die Schweißunterlage 11 wird eine Verbesserung der Effizienz (nicht abgebildet) des Schweißwerkzeugs 10 ermöglicht.

Zum Verschweißen einer ersten Folie 17 mit einer zweiten Folie 18 werden diese zwischen dem Oberwerkzeug 13 und der Schweißunterlage 11 in das Schweißwerkzeug 10 eingeführt und ausgerichtet. Anschließend werden Oberwerkzeug 13 und Unterwerkzeug 12 geschlossen, sodass die Folien 17, 18 nicht mehr im Schweißwerkzeug 10 verrutschen, und es wird elektrische Energie (nicht abgebildet) von der elektrischen Schaltanlage 14 an das Oberwerkzeug 13 und das Unterwerkzeug 12 übertragen.

Durch die elektrische Energie (nicht abgebildet) baut sich ein elektrisches Wechselfeld 19 zwischen dem Oberwerkzeug 13 und dem Unterwerkzeug 12 auf. Das elektrische Wechselfeld 19 führt durch dielektrische Verluste (nicht abgebildet) zu einer Erwärmung (nicht abgebildet) der Folien 17, 18.

Durch die Erwärmung (nicht abgebildet) erweichen die zu verschweißenden Folien 17, 18 und verbinden sich im aufgeschmolzenen Zustand (nicht abgebildet) auch durch den mechanischen Druck (nicht abgebildet) zwischen dem Oberwerkzeug 13 und dem Unterwerkzeug 12.

Anschließend wird die elektrische Energie (nicht abgebildet) von der elektrische Schaltanlage 14 gestoppt. Danach werden das Oberwerkzeug 13 und das Unterwerkzeug 12 geöffnet und die verschweißten Folien 17, 18 können entnommen werden.

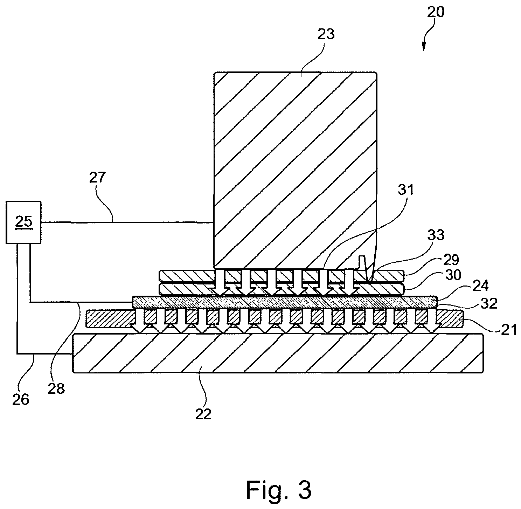

Das Schweißwerkzeug 20 in Fig. 3 besteht im Wesentlichen aus einer Schweißunterlage 21, einem Unterwerkzeug 22, einem Oberwerkzeug 23, einer elektrisch leitenden Lage 24 und einer elektrischen Schaltanlage 25, wobei das Oberwerkzeug 23 oberhalb des Unterwerkzeugs 22, die Schweißunterlage 21 zwischen der elektrisch leitenden Lage 24 und dem Unterwerkzeug 22 und die elektrisch leitenden Lage 24 zwischen der Schweißunterlage 21 und dem Oberwerkzeug 23 angebracht sind.

Die elektrische Schaltanlage 25 ist über die Leitungen 26 elektrisch mit dem Unterwerkzeug 22 und die Leitung 27 elektrisch mit dem Oberwerkzeug 23 sowie über die Leitung 28 mit der elektrisch leitenden Lage 24 verbunden.

Durch die Schweißunterlage 21 wird eine Verbesserung der Effizienz (nicht abgebildet) des Schweißwerkzeugs 20 ermöglicht.

Zum Verschweißen einer ersten Folie 29 mit einer zweiten Folie 30 werden diese zwischen dem Oberwerkzeug 23 und der elektrisch leitenden Lage 24 in das Schweißwerkzeug 20 eingeführt und ausgerichtet. Anschließend werden Oberwerkzeug 23 und Unterwerkzeug 22 geschlossen, sodass die Folien 29, 30 nicht mehr im Schweißwerkzeug 20 verrutschen, und es wird elektrische Energie (nicht abgebildet) von der elektrischen Schaltanlage 25 an das Oberwerkzeug 23, das Unterwerkzeug 22 und die elektrisch leitende Lage 24 übertragen.

Durch die elektrische Energie (nicht abgebildet) baut sich ein elektrisches Wechselfeld 31 zwischen dem Oberwerkzeug 23 und der elektrisch leitenden Lage 24 sowie ein elektrisches Wechselfeld 32 zwischen der elektrisch leitenden Lage 24 und dem Unterwerkzeug 22 auf.

Das Oberwerkzeug 23 weist eine Trennkante 33 auf, welche dazu führt, dass sich die elektrische Feldstärke (nicht abgebildet) des Wechselfeldes 31, die dielektrische Erwärmung (nicht abgebildet) und die mechanische Kraft (nicht abgebildet) vorteilhaft auf die Trennkante 33 konzentrieren.

Weiterhin wird durch die elektrisch leitende Lage 24 die Feldstärke (nicht abgebildet) des Wechselfeldes 31 in den Folien 29, 30 erhöht, wodurch eine Verbesserung der Effizienz (nicht abgebildet) des Schweißwerkzeugs 20 ermöglicht wird.

Das elektrische Wechselfeld 31 führt durch dielektrische Verluste (nicht abgebildet) zu einer Erwärmung (nicht abgebildet) der Folien 29, 30.

Durch die Erwärmung (nicht abgebildet) erweichen die zu verschweißenden Folien 29, 30 und verbinden sich im aufgeschmolzenen Zustand (nicht abgebildet) auch durch den mechanischen Druck (nicht abgebildet) zwischen der Trennkante 33 des Oberwerkzeugs 23 und der elektrisch leitenden Lage 24.

Anschließend wird die elektrische Energie (nicht abgebildet) von der elektrische Schaltanlage 25 gestoppt. Danach werden das Oberwerkzeug 23 und das Unterwerkzeug 22 geöffnet und die im Bereich der Trennkante 33 miteinander verschweißten Folien 29, 30 können entnommen werden.

### Liste der verwendeten Bezugszeichen

- 1: Schweißwerkzeug
- 2: Unterwerkzeug
- 3: Oberwerkzeug
- 4: elektrische Schaltanlage
- 5: Leitung
- 6: Leitung
- 7: Folie
- 8: Folie
- 9: Wechselfeld
- 10: Schweißwerkzeug
- 11: Schweißunterlage
- 12: Unterwerkzeug
- 13: Oberwerkzeug
- 14: elektrische Schaltanlage
- 15: Leitung
- 16: Leitung
- 17: Folie
- 18: Folie
- 19: Wechselfeld
- 20: Schweißwerkzeug
- 21: Schweißunterlage
- 22: Unterwerkzeug
- 23: Oberwerkzeug
- 24: elektrisch leitende Lage
- 25: elektrische Schaltanlage
- 26: Leitung
- 27: Leitung
- 28: Leitung
- 29: Folie
- 30: Folie
- 31: Wechselfeld
- 32: Wechselfeld
- 33: Trennkante

## Patentansprüche

1. Werkzeug zum HF-Verschweißen von zwei Folien, mit einem Oberwerkzeug, einem Unterwerkzeug und einer Schweißunterlage, wobei das Oberwerkzeug und
das Unterwerkzeug als Elektroden ausgeführt sind,
***dadurch gekennzeichnet, dass***
das Werkzeug eine elektrisch leitfähige Lage aufweist, wobei die elektrisch leitfähige Lage zumindest teilweise durch die Schweißunterlage von dem Unterwerkzeug getrennt ist.

2. Werkzeug nach Anspruch 1, ***dadurch gekennzeichnet*, *dass*** die Schweißunterlage einen elektrischen Isolator aufweist.

3. Werkzeug nach einem der Ansprüche 1 oder 2, ***dadurch gekennzeichnet, dass*** die Schweißunterlage thermisch leitend ist.

4. Werkzeug nach einem der vorstehenden Ansprüche, ***dadurch gekennzeichnet*, *dass*** die Schweißunterlage eine Aramidfaser aufweist.

5. Werkzeug nach einem der vorstehenden Ansprüche, ***dadurch gekennzeichnet*, *dass*** die Schweißunterlage Polyester aufweist.

6. Werkzeug nach einem der vorstehenden Ansprüche, ***dadurch gekennzeichnet, dass*** die Schweißunterlage Polyethylen aufweist.

7. Werkzeug nach einem der vorstehenden Ansprüche, ***dadurch gekennzeichnet, dass*** die Schweißunterlage ein Hartpapier aufweist.

8. Werkzeug nach einem der vorstehenden Ansprüche, ***dadurch gekennzeichnet, dass*** die elektrisch leitfähige Lage aus Metall ist.

9. Werkzeug nach einem der vorstehenden Ansprüche, ***dadurch gekennzeichnet, dass*** die elektrisch leitfähige Lage selbstklebend ist.

10. Werkzeug nach einem der vorstehenden Ansprüche, ***dadurch gekennzeichnet, dass*** die elektrisch leitfähige Lage mit der Schweißunterlage verbunden ist.

11. Werkzeug nach Anspruch 10, ***dadurch gekennzeichnet, dass*** die elektrisch leitfähige Lage mit der Schweißunterlage verklebt ist.

12. Werkzeug nach einem der vorstehenden Ansprüche, ***dadurch gekennzeichnet, dass*** das Oberwerkzeug eine Trennkante aufweist.

13. Werkzeug nach einem der vorstehenden Ansprüche, ***dadurch gekennzeichnet, dass*** die Schweißunterlage zwischen dem Unterwerkzeug und dem Oberwerkzeug angeordnet ist.

14. Werkzeug nach Anspruch 13, ***dadurch gekennzeichnet, dass*** die Schweißunterlage mit dem Unterwerkzeug verbunden ist.

15. Werkzeug nach einem der vorstehenden Ansprüche, ***dadurch gekennzeichnet, dass*** die elektrisch leitfähige Lage eine elektrische Verbindung zu der elektrischen Schaltanlage aufweist.

16. Anlage zum Verschweißen von Folien, mit einer Folienzuführung und einer Schweißstation,
***dadurch gekennzeichnet*, *dass***
die Schweißstation ein Werkzeug nach einem der vorstehenden Ansprüche aufweist.

17. Anlage zum Herstellen eines Beutels für medizinische Zwecke, mit einer Folienzuführung, einer Schweißstation und bevorzugt einer Befüllstation,
***dadurch gekennzeichnet*, *dass***
die Schweißstation ein Werkzeug nach einem der Ansprüche 1 bis 15 aufweist.

18. Verfahren zum Betreiben einer Anlage nach einem der Ansprüche 16 oder 17, mit den Schritten
a. Führen zweier Folien in die Schweißstation, wobei die Folien zwischen Oberwerkzeug und elektrisch leitfähige Lage geführt werden; und
b. Beaufschlagen der Elektroden mit hochfrequenter Elektrizität zum HF-Verschweißen der Folien.

19. Verfahren zum Betreiben einer Anlage nach Anspruch 17, mit den Schritten
a. Führen zweier Folien in die Schweißstation, wobei die Folien zwischen Oberwerkzeug und elektrisch leitfähige Lage geführt werden;
b. Beaufschlagen der Elektroden mit hochfrequenter Elektrizität zum HF-Verschweißen der Folien zu einem Beutel; und
c. Befüllen des Beutels.

20. Beutel, insbesondere ein Beutel für medizinische Zwecke, hergestellt aus zwei Folien mittels einer Anlage nach einem der Ansprüche 16 oder 17 und/oder eines Verfahrens nach einem der Ansprüche 18 oder 19.
